# EUROPÄISCHE PATENTSCHRIFT

(11) **EP 0 730 733 B1**
(45) Veröffentlichungstag und Bekanntmachung des Hinweises auf die Patenterteilung: **17.10.2007**
(21) Anmeldenummer: 95901324.4
(22) Anmeldetag: 23.11.1994
(51) Int. Cl.: G01N 22/02, E03F 7/12

(54) **VERFAHREN ZUR DETEKTION GANZ ODER TEILWEISE VERBORGENER INHOMOGENITÄTEN MITTELS MIKROWELLENSTRAHLUNG**
PROCESS FOR DETECTING TOTALLY OR PARTIALLY HIDDEN NON-HOMOGENEITIES BY MICROWAVE RADIATION
PROCEDE DE DETECTION DE DEFAUTS D'HOMOGENEITE ENTIEREMENT OU PARTIELLEMENT CACHES AU MOYEN DE MICRO-ONDES

(30) Priorität: 24.11.1993 DE 4340059
(43) Veröffentlichungstag der Anmeldung: 11.09.1996
(73) Patentinhaber: Fraunhofer-Gesellschaft zur Förderung der angewandten Forschung e.V., 80686 München (DE)
(72) Erfinder: HARTRUMPF, Matthias, D-76135 Karlsruhe (DE); MUNSER, Roland, D-76199 Karlsruhe (DE)
(74) Vertreter: Rösler, Uwe
(86) Internationale Anmeldenummer: PCT/DE1994/001384
(87) Internationale Veröffentlichungsnummer: WO 1995/014920

(56) Entgegenhaltungen:
- DE-A- 4 208 863
- DE-A- 4 243 201
- DE-A- 4 328 031
- US-A- 3 562 642

## Beschreibung

Die Erfindung betrifft ein Verfahren zur Detektion ganz oder teilweise verborgener Inhomogenitäten mittels Mikrowellenstrahlung gemäß dem Oberbegriff des Anspruchs 1.

### Stand der Technik

Zur Inspektion unzugänglicher Hohlräume (z.B. Kanalrohre) werden üblicherweise Kameras benutzt. Beispielsweise wird die Inspektion von Abwasserkanälen weitestgehend mit Kamera-Fahrzeugen durchgeführt. Damit können die Strukturen auf der Innenseite - z.B. der Zustand der inneren Kanalrohrwand - untersucht werden. Interessiert neben dem Zustand der Innenwand des Hohlraums auch die nähere Umgebung, so muß die Inspektion durch die Kamera durch Untersuchungen mit anderen Sensoren ergänzt werden - beispielsweise mit Sensoren, die auf der Reflexion von Mikrowellenstrahlung im umgebenden Medium basieren. Zur Untersuchung der Umgebung von Bohrlöchern bzw. Kanalrohren aus deren Inneren heraus wurden deshalb in den letzten Jahren spezielle Radarsysteme entwickelt.

Nach dem Stand der Technik (DASA-Firmenprospekt "**GeoT**elKANAL Tiefenradar für die Kanalinspektion" (Oktober 1992); M. Bockmair, A. Fisch, K.Peter: "Georadar - Erkennung von Schäden und Vortriebshindernissen" (in "Suchen Sehen Sanieren - Internationales Symposium für Wasser/Abwasser in Lindau 11.-13.3.93"); Firmenprospekt Riooltechnieken Nederland, Schieweg 60, 2627 AN Delft (November 1990)] bestehen diese Sensoren aus einem Paar nebeneinander angebrachter direktionaler Antennen (d.h. einer Sende- und einer Empfangsantenne, die vorzugsweise in einer Hauptrichtung abstrahlen oder die Mikrowellenstrahlung vorzugsweise aus einer Hauptrichtung empfangen) und sind so ausgeführt, daß die Mikrowellenstrahlung bevorzugt senkrecht zur Achse des zumeist zylindrischen Hohlraums gesendet bzw. empfangen wird. Sender und Empfänger sind in den bekannten Anordnungen bislang entlang der Achse eines Träger-Vehikels angeordnet und die Achsen ihrer Richtcharakteristiken sind in etwa parallel zueinander und senkrecht zur Trägerachse (und damit zur Hohlraumachse) ausgerichtet. Bei der Inpektion von Bohrlöchern können derartige Sensoren anstelle des Bohrkopfs in die Bohrung eingebracht werden und durch Drehung des Sensors um die Bohrlochachse kann eine komplette Erfassung des umgebenden Mediums erfolgen.

DE4243201 offenbart ein Verfahren zur Detektion verborgener Inhomogenitäten in einem undurchsichtigen Medium mit mindestens einer Mikrowellen-Sende-Antenne und mindestens einer Mikrowellen-Empfangs-Antenne, die auf derselben Seite der Oberfläche des zu untersuchenden Mediums auf einem gemeinsamen Träger angeordnet sind. Daraus, dass die beiden Antennen alternativ durch eine Antenne ersetzt werden können, ergibt sich, dass die Abstrahl/Empfangsrichtungen der beiden Antennen parallel sind. Aus der schwenkbaren Lagerung der Antennen ergibt sich, dass die Abstrahl/Empfangsrichtungen beider Antennen die Oberfläche des Mediums unter einem Winkel ungleich 90° schneiden.

US3562642 offenbart ein Verfahren zur Detektion verborgener Inhomogenitäten in einem Medium mit einer Mikrowellen-Sende-Antenne und einer Mikrowellen-Empfangs-Antenne. Die Abstrahl- und Empfangsrichtungen der beiden Antennen sind nicht parallel zueinander orientiert, die Abstrahl- und die Empfangsrichtungen schneiden die Oberfläche des Mediums unter einem Winkel ungleich 90° und die Abstrahl- und Empfangsrichtungen schliessen eine Winkelhalbierende ein, die die Oberfläche des Mediums unter einem Winkel ungleich 90° schneidet.

### Probleme

Bei derartigen Anordnungen kommt es zu zwei unterschiedlichen Problemen:
1. Durch die Ausrichtung der Sendeantennen etwa senkrecht zur Wand des Hohlraums entstehen an derselben oft sehr starke Reflexionen, die direkt auf die Empfangsantennen gelangen. Die Intensität der insgesamt empfangenen Strahlung hängt sehr empfindlich vom Winkel der Wand und der dahinter befindlichen Objekte relativ zu den Antennen ab. Die Abhängigkeit vom Winkel ist dabei sehr viel stärker als diejenige vom Material bzw. dessen komplexen Brechungsindex bei der benutzten Frequenz. Speziell bei der Inspektion von Kanälen, die in der Regel einen Feuchtigkeitsfilm auf der Rohroberfläche aufweisen, hängt die Stärke des mittleren empfangenen Signals primär von der Geometrie und der Ausrichtung der Wandoberfläche relativ zu den Antenne ab. Die Detektion der mittleren empfangenen Intensität erlaubt daher keinerlei Aussagen über den Rohrzustand bzw. das umgebende Material. Diese Aussagen werden erst - unter Ausnutzung der Ausbreitungsgeschwindigkeit der Mikrowellenstrahlung - durch eine mittelbare oder unmittelbare Zeit-, Frequenz- oder Phasen-Auflösung der empfangenen Strahlung (z.B. mittels Frequenzmodulationstechniken oder Pulsradar) möglich. Aufgrund der Höhe dieser Ausbreitungsgeschwindigkeit ist jedoch eine sehr aufwendige, schnelle und damit teure Elektronik eine unabdingbare Voraussetzung für die Umgebungsinspektion, da nur über diese die z.T. sehr starken - im Vergleich zu den interessierenden Reflexen innerhalb der Rohrwände bzw. der Umgebung - Signale von den Grenzschichten (innere Rohroberfläche und Grenzfläche Rohroberfläche / homogene Rohrumgebung) weitgehend unterdrückt werden können.
2. Mit derartigen Anordnungen allein wird die Wandung bzw. das dahinter befindliche Medium vorzugsweise in einer Richtung inspiziert, d.h. ohne zusätzliche Maßnahmen können relativ große Bereiche der Umgebung nicht erfaßt werden. Eine vollständige Inspektion ist daher bislang nur für die Inspektion der Umgebung von Bohrlöchern realisiert, bei der ein Radarsensor anstelle eines Bohrers im Bohrloch gedreht werden kann, d.h. die vollständige Erfassung des umgebenden Erdreichs durch eine Drehung eines Sende- Empfangsantennenpaars möglich ist. Bei Anordnungen wie z.B. Kanalrobotern, bei denen das Trägervehikel keine Drehung durchführt, muß nach dem Stand der Technik zur kompletten Inspektion deshalb eine drehbare Halterung der Antennen vorgesehen werden, falls eine komplette Inspektion der Umgebung vorgenommen werden soll.

### Erfindung

Aufgabe der Erfindung ist es, das Verfahren gemäß dem Oberbegriff des Anspruchs 1 dahingehend zu verbessern, daß eine verbesserte Ortsauflösung ganz oder teilweise verborgener Inhomogenitäten in undurchsichtigen Medien mittels Mikrowellenstrahlung ermöglicht wird. Dies wird erfindungsgemäß durch Anspruch 1 gelöst. Vorteilhafte Ausgestaltungen sind in den Unteransprüchen gekennzeichnet.

Grundgedanke der Erfindung ist es, diese Probleme durch folgende Maßnahmen zu vermeiden:
1. Ausrichtung der Antennen so, daß die an der (glatten) Rohrwand und die an der Grenzfläche Rohrwand zu umgebendem homogenem Erdreich reflektierte Strahlung in der Regel nicht auf die Empfangsantennen gelangt. Dies gelingt, indem zumindest eine Antenne gegenüber den bekannten Anordnungen so gedreht wird, daß ihre mittlere Richtcharakteristik einen Winkel ungleich 90° zur Achse des Trägers aufweist (die in der Regel mit der Hohlraumachse übereinstimmt), so daß die Mikrowellen-Strahlung schief auf die Oberfläche des Mediums auftrifft.
2. Anordnung einer Sende- und mehrerer Empfangsantennen (nach Anspruch 3), so daß jeweils die von einer Sendeantenne im Rohr und dem umgebenden Medium erzeugten Signale mit mindestens zwei Antennen empfangen werden können. Eine technisch gleichwertige Anordnung besteht aus mehreren Sendeantennen und einer oder mehreren Empfangsantennen, die den Sende-Antennen nicht eins-zu-eins zugeordnet sind (siehe Anspruch 4): dabei werden die zeitlich nacheinander von den Sendeantennen erzeugten Signale mit der oder den Empfangsantennen gemessen. Aus den unterschiedlichen gemessenen Signalen kann dann mit den bekannten Sender- und Empfängercharakteristiken die Lage einer Inhomogenität in Richtung des durch die Richtcharakteristik-Achsen der gleichartig betriebenen Antennen aufgespannten Winkelbereichs ermittelt werden. Werden die Signale außerdem noch unmittelbar oder mittelbar Zeit-, Frequenz- oder Phasen- aufgelöst, so kann auch die Winkellage mehrerer, in unterschiedlichem Abstand befindlicher Inhomogenitäten ermittelt werden.

### Vorteilhafte Wirkungen der Erfindung

Bei einer unter 1. beschriebenen Ausrichtung der Antennen (bei Verwendung mehrerer direktionaler Mikrowellen-Antennen nach Anspruch 1) relativ zur Wand eines Kanalrohrs, das von homogenem Boden umgeben ist, wird die Strahlung an der Grenzfläche Luft / Kanalrohr und Kanalrohr / umgebendes Erdreich nur in geringem Ausmaß auf die Empfangs-Antenne (nach Anspruch 1) reflektiert. Erst bei Anwesenheit einer Inhomogenität (z.B. Riß in der Rohrwand, Luftkammer oder Feuchtigkeitszwiebel in der Umgebung des Rohres), wird die Strahlung zum Empfänger hin gestreut. Dadurch kann bereits aus der mittleren empfangenen Intensität auf eine Inhomogenität des umgebenden Mediums geschlossen werden und das Verhältnis "Störsignal" (von den Wänden des Rohres auf die Empfangsantenne fallende Strahlung) zu interessierendem Signal (an Inhomogenitäten im Rohr bzw. der Umgebung auf die Empfangsantenne reflektierte bzw. gestreute Strahlung) erheblich verkleinert werden.

Dieses "Störsignal" kann bei Antennen-Anordnungen nach dem Stand der Technik, in Abhängigkeit von der Struktur der Oberfläche und ihrer Ausrichtung relativ zu den Antennen, um Größenordnungen stärker als die Signale von den zu detektierenden Inhomogenitäten sein und nur direkt bzw. indirekt über laufzeitabhängige Effekte unterdrückt werden. Daher ist es mit den bekannten Radarverfahren auch praktisch nicht möglich, Inhomogenitäten im Rohrinneren, d.h. zwischen Rohraußen- und Innenwand, zu detektieren.

Weiterhin hängen in einer Antennen-Anordnung nach dem Stand der Technik auch die von den Inhomogenitäten im Medium empfangenen Signale stärker von deren Oberflächenstruktur und Ausrichtung relativ zu den Antennen als von dem komplexen Brechungsindex ab, so daß die Interpretation der gemessenen Reflexionen sehr komplex und zumeist nicht eindeutig ist. Auch hier kann durch eine erfindungsgemäße Messung der Intensitäten der rückwärts gestreuten Wellen die Abhängigkeit der detektierten Intensität vom Winkel der Oberfläche zu den Antennen stark vermindert werden, wodurch eine erheblich vereinfachte und eindeutigere Interpretation der Messungen ermöglicht wird.

Ist eine mechanische Drehung eines Sende- und Empfangs-Antennenpaars nicht erwünscht bzw. möglich, so ist erst durch eine erfindungsgemäße Anordnung mehrerer Sende- und Empfangsantennen zum Beispiel in über den Umfang des Trägervehikels angeordneten Gürteln, die gegeneinander in Richtung der Vehikelachse gesehen verdreht sind, eine Bestimmung des Winkels einer detektierten punktförmigen Inhomogenität relativ zu den Antennen möglich. Für ausgedehnte Inhomogenitäten kann demgegenüber eine (mit der Richtcharakteristik der Sende- / Empfangsantennen gewichtete) mittlere Winkellage detektiert werden.

### Weiterbildungen der Erfindung

In einer Weiterbildung der Erfindung nach Anspruch 6 bestehen die Antennen aus flachen bzw. gebogenen Patches. Dadurch können Mikrowellen- bzw. Radarsensoren mit sehr geringem Platzbedarf aufgebaut werden, die - im Gegensatz zu den bekannten Anordnungen, die ein eigenes Trägerfahrzeug erfordern - zusätzlich auf einem marktüblichen Kamera-Inspektionsfahrzeug anbringbar sind.

Wird mit diesen oder anderen Antennenformen, die Oberwellen der Grundfrequenz emittieren bzw. empfangen können, entsprechend Anspruch 7 zeitlich nacheinander sowohl mit der Grundwelle, als auch mit einer oder mehreren Oberwellen angeregt bzw. detektiert, so kann mit der gleichen Anordnung von Sende- und Empfangsantennen, unter Ausnutzung der in Abhängigkeit von der Frequenz unterschiedlichen Eindringtiefe der Mikrowellenstrahlung und der unterschiedlichen Sende- und Empfangscharakteristiken, die Auflösung der räumlichen Lage der Inhomogenität(en) verbessert werden.

Ferner kann damit, unter Ausnutzung der vom komplexen Brechungsindex der Inhomogenität bei der jeweiligen Frequenz abhängigen Stärke der rückgestreuten Mikrowellenstrahlung, eine genauere Identifikation der Art der Inhomogenität (Hohlraum, Gestein, Wasserblase..) vorgenommen werden.

Weiterhin ist es damit selbst bei einfachsten Anwendungen, bei denen die einzelnen Sendeantennen zeitlich nacheinander mit unmodulierter bzw. amplitudenmodulierter Mikrowellenstrahlung angeregt werden, bereits möglich, aufgrund der unterschiedlichen Eindringtiefe der Mikrowellenstrahlung die Lage einer Inhomogenität in Richtung der mittleren Abstrahlrichtung annähernd zu bestimmen.

Zur kompletten Erfassung der Umgebung rund um ein gegebenes Trägervehikel können mehrere Sende- und Empfangsantennenpaare auf demselben angeordnet werden. Die Zahl der Antennenpaare wird man in der Regel so wählen, daß sie, multipliziert mit dem Öffnungswinkel der Sende- bzw. Empfangscharakteristik, einen Wert größer als 360° ergibt. Um eine gute und möglichst einfache Abschirmung der Sender und Empfänger zu ermöglichen, wird man nach dem Stand der Technik nach Möglichkeit sowohl Sendeantenne.1 als auch Empfangsantennen in Form eines n-Ecks anordnen, bei dem die Abstrahl- und Empfangsrichtungen annähernd senkrecht zur Achse des Trägervehikels und ihre Projektionen in eine zu dieser Achse senkrechte Ebene paarweise parallel sind, d.h. auf demselben wird sich je ein Sender- und ein Empfängergürtel befinden. Damit kann dann zwar eine komplette Erfassung des umgebenden Mediums erfolgen, jedoch kann die Winkellage der detektierten Inhomogenitäten in der zur Gürtelachse senkrechten Ebene nur auf einen Bruchteil von 360 °/n genau ermittelt werden.

Eine diesem Stand der Technik gegenüber sehr viel genauere Bestimmung der Winkellage ist hingegen möglich, wenn erfindungsgemäß Sender- und Empfängergürtel entsprechend Anspruch 8 gegeneinander so verdreht sind, daß die von einer Sendeantenne emittierte und an den Inhomogenitäten gestreute bzw. reflektierte Strahlung mit mindestens zwei Antennen detektiert werden kann. Bei bekannten Sende- und Empfängercharakteristiken kann dann aus den Unterschieden der detektierten Intensitäten und Phasen die Winkellage der Inhomogenitäten bestimmt werden. Prinzipiell ist die gleiche Information ermittelbar, wenn zwei Sender zeitlich nacheinander Mikrowellenstrahlung emittieren und die an den Inhomogenitäten gestreute bzw. reflektierte Strahlung von mindestens einer Antenne detektiert wird.

Durch die Anbringung weiterer Antennengürtel auf dem Trägervehikel gemäß Anspruch 9 kann die Auflösung der räumlichen Lage der Inhomogenitäten weiter verbessert werden.

Die oben beschriebenen Verfahren sind unabhängig von der Art der Anregung und Detektion der Mikrowellenstrahlung. Die Vorteile sind schon bei sehr einfachen Sensoren nutzbar, bei denen eine CW- (constant wave = mit konstanter Amplitude) bzw. AM-(amplitudenmoduliert) Anregung einer Antenne bzw. eine abwechselnde Anregung mehrerer Antennen erfolgt. Bei solchen Sensoren kann jedoch eine Auflösung in Strahlrichtung nur grob über die Überlappungsbereiche der Sende- und Empfangscharakteristiken bzw. die unterschiedliche Reichweite der Mikrowelleristrahlung bei unterschiedlichen Frequenzen erfolgen. Werden entsprechend Anspruch 10 jedoch zusätzlich Radartechniken zur Anregung und zeitlichen Auflösung der empfangenen Strahlung eingesetzt, so kann auch der Abstand mehrerer in Strahlrichtung hintereinander befindlicher Inhomogenitäten zu den Antennen bestimmt werden.

### Darstellung der Erfindung

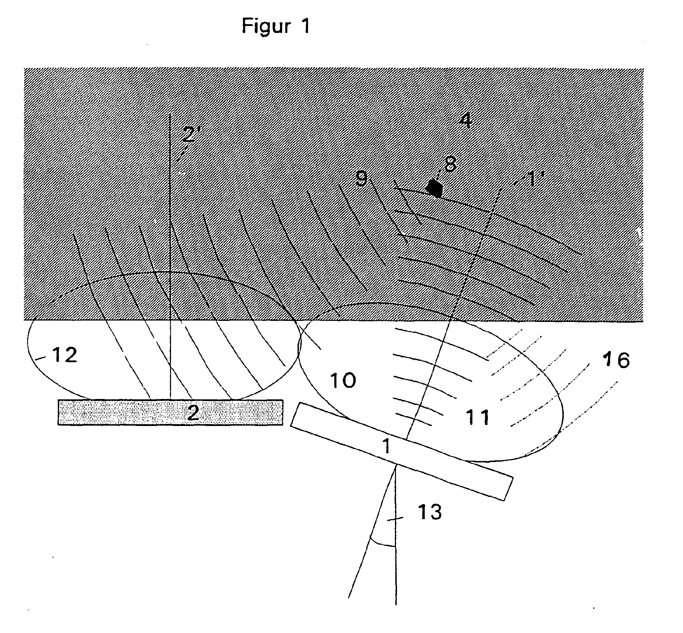

Drei Ausführungsbeispiele der Erfindung nach den Ansprüchen 1-12 werden anhand der Figuren 1 bis 3 erläutert.

Es zeigt Figur 1 die seitliche Sicht auf ein Beispiel einer erfindungsgemäßen Verkippung einer Sendeantenne 1 mit einer Abstrahlrichtung 1'. Sie ist um einen Winkel 13 gegen die (mittlere) Senkrechte auf das zu inspizierende Medium 4 verkippt. Der Winkel 13 sollte größer als 13° sein und beträgt vorzugsweise 30 - 60°. Die von dieser Antenne mit einer Abstrahlcharakteristik 4 emittierte Mikrowellenstrahlung 5 wird teilweise an der Grenzfläche zum Medium reflektiert. Die reflektierte Strahlung 16 kann von der Empfangsantenne praktisch nicht detektiert werden, da die mittlere Abstrahlrichtung 1' und die mittlere Empfangsrichtung 2' nicht symmetrisch zur (mittleren) Senkrechten auf das zu inspizierende Medium 4 liegen (d.h. die Winkelhalbierende des aus Senderichtung 1' und Empfangsrichtung 2' gebildeten Winkels steht in einem Winkel ungleich 90 auf der Oberfläche des Mediums), d.h. an der Grenzfläche zum Medium können nur wenige, die Detektion von Inhomogenitäten störende Signale entstehen. Trifft die in das Medium 4 eindringende Mikrowellenstrahlung auf eine Inhomogenität 8, so gelangt ein Teil der daran gestreuten Strahlung 9 in Richtung zur Empfangsantenne 2, deren Richtcharakteristik mit 12 und deren mittlere Empfangsrichtung mit 2' bezeichnet ist.

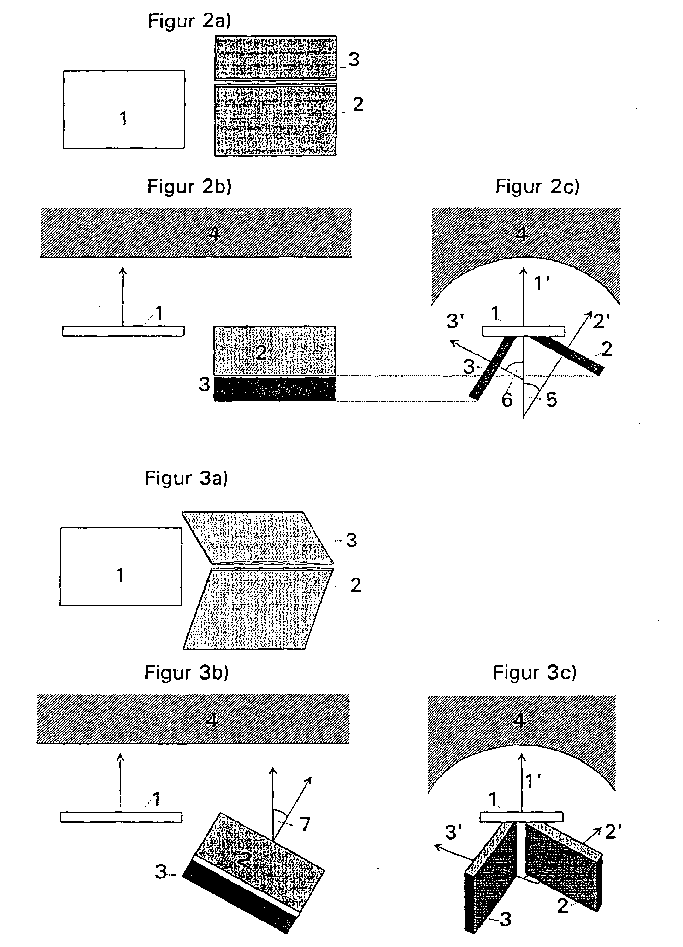

In der Figur 2 a) ist die Sicht *auf* ein Beispiel einer erfindungsgemäßen Anordnung von einer Sendeantenne (1) und zwei Empfangsantennen (2 und 3) zur Detektion der Winkellage einer Inhomogenität in der Umgebung 4 eines zylindrischen Hohlraums. Die Figuren 2b) und 2c) zeigen die Seitenansicht und die Sicht auf einen Schnitt senkrecht zur Achse des zu inspizierenden Hohlraums. Die von der Sendeantenne 1 abgestrahlte Mikrowellenstrahlung wird teilweise an Inhomogenitäten des umgebenden Mediums 4 gestreut bzw. reflektiert und ein Teil dieser gestreuten Strahlung wird mit Antenne 2, ein anderer Teil mit Antenne 3 detektiert. Die Unterschiede der jeweils detektierten Intensitäten hängen primär vom Abstand der Inhomogenität(en) zu den Antennen und ihrer Lage relativ zu den Abstrahl- und Empfangscharakteristiken der jeweiligen Antennen sowie der Winkellage (5) bzw. (6) der Empfangsantenne (2) bzw. (3) zur Sendeantenne (1) ab.

Figur 3 zeigt eine Anordnung in der beide Erfindungsgedanken realisiert sind.

Wie in Figur 2 sind das Mediums mit (4), die Antennen mit (1,2 und 3), und die mittlere Richtung der Empfangscharakteristiken mit (2' und 3') bezeichnet. Figur 3a) zeigt die Draufsicht, Figur 3b) die Seitenansicht und Figur 3c) die Sicht auf einen Schnitt senkrecht zur Achse des zu inspizierenden Hohlraums. Der Unterschied in der Figur 3 gezeigten Anordnung zu der in Figur 2 gezeigten besteht in der Verkippung der Empfangsantennen um einen Winkel (7) gegen die Richtung der mittleren Abstrahlung und hin zur Achse des zylindrischen Hohlraums. Dadurch kann die Detektion von an der Grenzfläche Hohlraum zu umgebenden Medium vermieden bzw. minimert werden. Ein weiterer Vorteil dieser Verkippung ist die geringere Empfindlichkeit gegenüber Struktur und Ausrichtung der Oberfläche der zu detektierenden Inhomogenitäten.

## Patentansprüche

1. Verfahren zur Detektion ganz oder teilweise verborgener Inhomogenitäten in undurchsichtigen Medien mittels Mikrowellenstrahlung mit mindestens einer Mikrowellen-Sende-Antenne und mindestens einer Mikrowellen-Empfangs-Antenne, die auf derselben Seite der Oberfläche des zu untersuchenden Mediums angeordnet sind,
**dadurch gekennzeichnet,**
**dass** die wenigstens eine Mikrowellen-Sende-Antenne eine direktionale Abstrahlrichtung und die wenigstens eine Mikrowellen-Empfangs-Antenne eine direktionale Empfangsrichtung aufweisen, dass die wenigstens eine Mikrowellen-Sende- und die wenigstens eine Mikrowellen-Empfangs-Antenne auf einem gemeinsamen Träger derart angeordnet werden, dass jeweils die Abstrahl- und Empfangsrichtung nicht parallel zueinander orientiert sind, die Abstrahl- und/oder die Empfangsrichtung die Oberfläche des Mediums (4) unter einem Winkel ungleich 90° schneiden und die Abstrahl- und Empfangsrichtung eine Winkelhalbierende einschliessen, die die Oberfläche des Mediums (4) unter einem Winkel ungleich 90° schneidet.

2. Verfahren nach Anspruch 1,
**dadurch gekennzeichnet, dass** bei einer Anordnung gleich vieler Mikrowellen-Sende-Antennen und Mikrowellen-Empfangs-Antennen die Antennen jeweils paarweise angeordnet werden.

3. Verfahren nach Anspruch 1,
**dadurch gekennzeichnet, dass** bei einer Anordnung von wenigstens einer Mikrowellen-Sende-Antenne sowie mehreren Mikrowellen-Empfangs-Antennen aus dem Amplituden-Verhältnis und/oder der unterschiedlichen Laufzeit und/oder der unterschiedlichen Phase der empfangenen Signale der Winkel des detektierten Objektes in Richtung des durch die Richtcharakteristik-Achsen der gleichartig betriebenen Antennen aufgespannten Winkelbereichs ermittelt wird.

4. Verfahren nach Anspruch 1,
**dadurch gekennzeichnet, dass** bei einer Anordnung von mehreren Mikrowellen-Sende-Antennen sowie wenigstens einer Mikrowellen-Empfangs-Antenne die Mikrowellen-Sende-Antennen zeitlich nacheinander erzeugte Signale senden, und aus dem Amplituden-Verhältnis und/oder der unterschiedlichen Laufzeit und/oder der unterschiedlichen Phase der empfangenen Signale der Winkel des detektierten Objektes in Richtung des durch die Richtcharakteristik-Achsen der gleichartig betriebenen Antennen aufgespannten Winkelbereichs ermittelt wird.

5. Verfahren nach einem der Ansprüche 1 bis 4,
**dadurch gekennzeichnet, dass** die wenigstens eine Mikrowellen-Sende- und die wenigstens eine Mikowellen-Empfangs-Antenne auf dem Träger dreh- oder verstellbar angeordnet werden.

6. Verfahren nach den Ansprüchen 1 bis 5,
**dadurch gekennzeichnet, dass** die wenigstens eine Mikrowellen-Sende- und die wenigstens eine Mikrowellen-Empfangs-Antenne als flache oder gebogene Patch-Antenne ausgebildet werden.

7. Verfahren nach den Ansprüchen 1 bis 6,
**dadurch gekennzeichnet, dass** die wenigstens eine Mikrowellen-Sende- und die wenigstens eine Mikrowellen-Empfangs-Antenne sowohl mit der Grundwelle als auch mit einer oder mehreren Oberwellen betrieben werden.

8. Verfahren nach einem der Ansprüche 1 bis 7,
**dadurch gekennzeichnet, dass** bei einer Vielzahl von Mikrowellen-Sende- und Mikowellen-Empfangs-Antennen auf dem Träger die Mikrowellen-Sende- und Empfangs-Antennen in Form von mindestens zwei Gürteln mit einer Anordnung der Antennen oder ihrer Abstrahlungs-/Empfangsflächen in Form eines n-Ecks um eine Achse des Trägers angeordnet werden, und
dass die in eine Ebene senkrecht zur Achse des Trägers projizierten mittleren Abstrahl- und Empfangsrichtungen nicht parallel zueinander verlaufen und bei
Anordnung der Antennen in gleich ausgebildeten Sende- und Empfangsgürteln, diese Gürtel gegeneinander verdreht auf dem Trägergerät angebracht werden.

9. Verfahren nach Anspruch 8,
**dadurch gekennzeichnet, dass** ein oder mehrere weitere Sende- und/oder Empfangsgürtel zur Verbesserung der Ortsauflösung auf dem Trägergerät angebracht werden.

10. Verfahren nach einem der Ansprüche 1 bis 9,
**dadurch gekennzeichnet, dass** die Abstrahlung der Mikrowellen in Form von Pulsen oder moduliert erfolgt und die empfangene Strahlung unmittelbar oder mittelbar nach der Zeit, der Frequenz oder der Phase aufgelöst gemessen wird.

11. Verfahren nach einem der Ansprüche 1 bis 10,
**dadurch gekennzeichnet, dass** als ganz oder teilweise verborgene Inhomogenitäten Risse oder sonstige Schadstellen in undichten Rohrverbindungen, in einer Wand von Kanalrohren oder von luft- oder wassergefüllten Hohlräumen, nasse Stellen, Steine, Gegenständen aus Beton, Steingut oder Metall in der Umgebung von Rohren detektiert werden.

12. Verfahren nach einem der Ansprüche 1 bis 11,
**dadurch gekennzeichnet, dass** ein Trägervehikel oder ein Inspektions- oder Sanierungsfahrzeug als Träger für die wenigstens eine Mikrowellen-Sende-Antenne und die wenigstens eine Mikrowellen-Empfangs-Antenne verwendet wird.

## Claims

1. A method for detecting completely or partially concealed inhomogeneities in nontransparent media by means of microwave radiation using at least one microwave transmission antenna and at least one microwave reception antenna disposed on the same side of the surface of the to-be-examined medium,
the at least one microwave transmission antenna has a directional emission direction and the at least one microwave reception antenna has one directional reception direction,
the at least one microwave transmission antenna and the at least one microwave reception antenna are arranged on a common carrier in such a manner that the transmission and reception direction are not oriented parallel to each other, the transmission direction and/or the reception direction intersect the surface of the medium (4) at an angle unequal 90° and the transmission direction and reception direction enclose an angle-bisecting line which intersects the surface of the medium (4) at an angle unequal 90°.

2. The method according to claim 1,
**characterized in that** in an arrangement with the same number of microwave transmission antennas and microwave reception antennas, the antennas are disposed in pairs.

3. The method according to claim 1,
**characterized in that** in an arrangement with at least one microwave transmission antenna and a multiplicity of microwave reception antennas, the angle of the detected object in the direction of the angle range set by the directional characteristic axes of the same-operated antennas is determined from the amplitude ratio and/or the different duration and/or the different phase of the received signals.

4. The method according to claim 1,
**characterized in that** in an arrangement with a multiplicity of microwave transmission antennas and at least one microwave reception antenna, the microwave transmission antennas transmit temporally successively generated signals and the angle of the detected object in the direction of the angle range set by the directional characteristic axes of the same-operated antennas is determined from the amplitude ratio and/or the different duration and/or the different phase of the received signals.

5. The method according to one of the claims 1 to 4,
**characterized in that** the at least one microwave transmission antenna and the at least one microwave reception antenna are disposed on the carrier in a turnable or adjustable manner.

6. The method according to claims 1 to 5,
**characterized in that** the at least one microwave transmission antenna and the at least one microwave reception antenna are designed as a flat or curved patch antenna.

7. The method according to the claims 1 to 6,
**characterized in that** the at least one microwave transmission antenna and the at least one microwave reception antenna are operated with the ground wave as well as with one or a multiplicity of harmonic waves.

8. The method according to one o the claims 1 to 7,
**characterized in that** in the case of a multiplicity of microwave transmission antennas and microwave reception antennas, the microwave transmission antennas and the microwave reception antennas are disposed on the carrier in the form of at least two belts with one arrangement of the antennas or their emission/reception areas disposed in the form of an n-corner about one axis of the carrier, and
the average emission and reception directions projected into one plane perpendicular to the axis of the carrier do not run in parallel and in an arrangement of antennas in same-designed transmission and reception belts, these belts are disposed on the carrier device in a twisted manner.

9. The method according to claim 8,
**characterized in that** one or a multiplicity of additional transmission and/or reception belts are disposed on the carrier device to improve local resolution.

10. The method according to one of the claims 1 to 9,
**characterized in that** emission of the microwaves is in the form of pulses or modulated and the received radiation is directly or indirectly measured resolved according to time, frequency or phase.

11. The method according to one of the claims 1 to 10,
**characterized in that** cracks or other damaged areas in leaking pipelines, in a wall of a sewage pipe or in air-filled or water-filled hollow spaces, moist areas, stones, concrete, ceramic or metal objects in the vicinity of the pipes are detected as completely or partially concealed inhomogeneities.

12. The method according to one of the claims 1 to 11,
**characterized in that** a carrier vehicle or an inspection or repair vehicle is employed as the carrier for the at least one microwave transmission antenna and the at least one reception antenna.

## Revendications

1. Procédé pour la détection d'hétérogénéités entièrement ou partiellement dissimulées dans des milieux non transparents au moyen d'un rayonnement à micro-ondes avec au moins une antenne émettrice à micro-ondes et au moins une antenne réceptrice à micro-ondes qui sont disposées sur le même côté de la surface du milieu à analyser
**caractérisé en ce qu'**
au moins une antenne émettrice à micro-ondes présente une direction de rayonnement directionnelle et qu'au moins une antenne de réception à micro-ondes présente une direction de réception directionnelle, **en ce qu'**au moins l'antenne émettrice à micro-ondes et au moins l'antenne réceptrice à micro-ondes sont disposées sur un support commun de telle sorte que chaque direction de rayonnement et de réception ne sont pas orientées parallèlement l'une par rapport à l'autre, la direction de rayonnement et/ou de réception coupent la surface du milieu (4) à un angle inégal à 90° et **en ce que** la direction de rayonnement et de réception comportent une bissectrice qui coupe la surface du milieu (4) à un angle inégal à 90°.

2. Procédé selon la revendication 1
**caractérisé en ce que** pour une disposition égale à de nombreuses antennes d'émission à micro-ondes et d'antennes réceptrices à micro-ondes, les antennes sont à chaque fois disposées par paires.

3. Procédé selon la revendication 1
**caractérisé en ce que** pour une disposition d'au moins une antenne émettrice à micro-ondes ainsi que plusieurs antennes de réception à micro-ondes, l'angle de l'objet à détecter dans la direction de la zone angulaire déployée à travers les axes de caractéristiques directionnelles des antennes fonctionnant de la même façon, est déterminé à partir du rapport d'amplitude et/ou du temps de fonctionnement différent et/ou de la phase différente des signaux reçus.

4. Procédé selon la revendication 1
**caractérisé en ce que** pour une disposition de plusieurs antennes émettrices à micro-ondes ainsi qu'au moins une antenne réceptrice à micro-ondes, les antennes émettrices à micro-ondes émettent des signaux générés chronologiquement les uns après les autres et l'angle de l'objet à détecter dans la direction de la zone angulaire déployée à travers les axes de caractéristiques directionnelle des antennes fonctionnant de la même façon, est déterminé à partir du rapport d'amplitude et/ou du temps de fonctionnement différent et/ou de la phase différente des signaux reçus.

5. Procédé selon les revendications 1 à 4
**caractérisé en ce qu'**au moins l'antenne émettrice à micro-ondes et au moins l'antenne réceptrice à micro-ondes sont disposées sur le support de façon pivotable ou réglable.

6. Procédé selon les revendications 1 à 5
**caractérisé en ce qu'**au moins l'antenne émettrice à micro-ondes et au moins l'antenne réceptrice à micro-ondes sont constituées comme une antenne à connexions plate ou courbe.

7. Procédé selon les revendications 1 à 6
**caractérisé en ce qu'**au moins l'antenne émettrice à micro-ondes et au moins l'antenne réceptrice à micro-ondes sont actionnées tant avec une onde fondamentale qu'avec une ou plusieurs ondes harmoniques.

8. Procédé selon les revendications 1 à 7
**caractérisé en ce que** pour un grand nombre d'antennes émettrices et réceptrices à micro-ondes, les antennes émettrices et réceptrices à micro-ondes sont disposées sur le support sous la forme d'au moins deux bandes avec une disposition des antennes ou de leurs surfaces de rayonnement/de réception en forme d'angle n autour d'un axe du support,
**en ce que** les directions de rayonnement et de réception médianes projetées dans un plan perpendiculairement à l'axe du support ne sont pas parallèles entre elles et
**en ce que** pour une disposition des antennes en bandes émettrices et réceptrices formées de façon identique, ces bandes sont montées tournées l'une contre l'autre sur l'appareil porteur.

9. Procédé selon la revendication 8
**caractérisé en ce que** une ou plusieurs autres bandes émettrices et/ou réceptrices sont montées sur l'appareil porteur pour améliorer la résolution locale

10. Procédé selon les revendications 1 à 9
**caractérisé en ce que** le rayonnement des micro-ondes a lieu sous la forme d'impulsions ou par modulation et le rayonnement reçu est mesuré résolu, directement ou indirectement en fonction du temps, de la fréquence ou de la phase.

11. Procédé selon les revendications 1 à 10
**caractérisé en ce que** l'on détecte des fissures ou autres points de dommage dans des conduits non étanches, dans une paroi de canalisations ou de cavités remplies d'air ou d'eau, de lieux humides, pierres, objets en béton, grès ou métal dans un environnement de conduits en tant qu'hétérogénéités entièrement ou partiellement dissimulées.

12. Procédé selon les revendications 1 à 11
**caractérisé en ce qu'**un véhicule portable ou un véhicule d'inspection ou d'assainissement est utilisé comme support pour au moins l'antenne émettrice à micro-ondes et au moins l'antenne réceptrice à micro-ondes.
